# EUROPEAN PATENT APPLICATION

(11) **EP 2 647 664 A1**
(43) Date of publication of application: **09.10.2013**
(21) Application number: 12163097.4
(22) Date of filing: 04.04.2012
(51) Int. Cl.: C08K 5/3492, C08K 5/3435

(54) **Method for stabilizing polyolefin films against UV degradation**

(71) Applicant: CYTEC TECHNOLOGY CORP., Wilmington, Delaware 19801 (US)
(72) Inventor: Vulic, Iwan, 7608 Almelo (NL); Samuels, Sari-Beth, Ramsey, New Jersey NJ 07446 (US); Steele, Thomas, Milford, CT Connecticut 06460 (US)
(74) Representative: Deckers, Hellmuth Alexander

(57) **Abstract**

The invention relates to a method for the stabilization of polyolefin films against degradation in the presence of agrochemicals comprising incorporation into the polyolefin a stabilizer composition comprising i) at least one o-hydroxyphenyl triazine ultraviolet light absorber (I) selected from 2-(2'-hydroxyphenyl)-1,3,5-triazine compounds ; ii) at least one ultraviolet light stabilizer selected from tetramethyl-4-piperidinyl compounds (II) according to Formula II 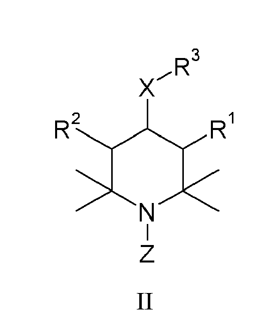 wherein: X represents a bridging group selected from the group of -O-C(=O)- , -CR'₂-C(=O)-, -CR'₂-C(=O)-NR'- , -NR'-C(=O)- , -C(=O)-NR'- , -O- , -NR'- or -C(=O)- where each R', independently, represents H or C₁₋₂₀ hydrocarbyl; Z represents H, -R, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl; R³ is a C₆₋₃₀ hydrocarbyl; each of R¹ and R² is, independently, chosen from H and C₁-C₆ alkyl; and iii) at least one light stabilizer (III) chosen from hindered amine light stabilizers (HALS) different from compound of formula II.

## Description

The present invention relates to a method for stabilizing polyolefin films against UV degradation, especially in the presence of agrochemicals such as pesticides, insecticides, fumigants, and soil disinfectants. The present invention further relates to stabilized polyolefin films, more specifically to polyolefin films that can be used in agricultural applications such as greenhouse and tunnel films, solarization films and mulch films.

Polyolefin films stabilized against long term exposure to light are known in the art. Several attempts have been described to increase the stabilization of agricultural films used as greenhouse film covers, so that they can last longer in service. For example, it has been reported that the addition of metal oxides, salts or hydroxides enhances the stability of films that are exposed to pesticides. However the addition of such compounds, e.g. zinc oxide, imparts a milky or hazy appearance of the films and reduced transparency, which has an adverse effect on the light transmission into the greenhouse. US 2006/0141207 describes transparent polyolefin films for agricultural applications such as greenhouse films, containing a mixture of a triazine based UV absorber and a sterically hindered amine light stabilizer (HALS). As described in WO 2007/088114 the incorporation of tertiary amines having a molecular weight above 400 into greenhouse films improves the stability of such films when they are exposed to a sulphur-based pesticide treatment which is common practice in greenhouse applications.

However there is still a need for polyolefin films for greenhouse applications presenting better light stability, especially in the presence of agrochemicals such as pesticides, insecticides, and fumigants.

Applicants have found that a combination of specific triazine based UV absorbers, HALS and a specific type of tetramethyl-4-piperidinyl compounds as described here under increases the stability of polyolefin films for agricultural applications exposed to agrochemicals such as pesticides, insecticides, fumigants, and soil disinfectants, so that these films can be used for a longer period of time.

The present invention therefore relates to a method for the stabilization of polyolefin films against degradation in the presence of agrochemicals comprising incorporation into the polyolefin a stabilizer composition comprising
i) at least one o-hydroxyphenyl triazine ultraviolet light absorber (I) selected from 2-(2'-hydroxyphenyl)-1,3,5-triazine compounds according to Formula I: 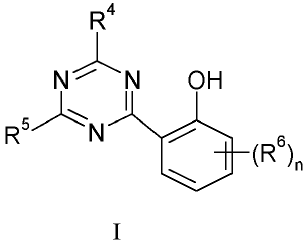 wherein:
   each of R⁴ and R⁵ is, independently, chosen from C₆₋₁₀ aryl; or C₆₋₁₀ aryl substituted by one to three of : hydroxyl, halogen, C₁₋₁₂ hydrocarbyl, C₁₋₁₂ alkoxy, C₁₋₁₂ alkoxyester, C₂₋₁₂ alkanoyl , phenyl or by phenyl substituted by one to three of: hydroxyl, halogen, C₁₋₁₂ hydrocarbyl, C₁₋₁₂ alkoxy, C₁₋₁₂ alkoxyester, and C₂₋₁₂ alkanoyl, or by mixtures thereof; or mono- or di-C₁₋₁₂ hydrocarbyl-substituted amino; or C₂₋₁₂ alkanoyl ; or C₁₋₁₂ alkyl; or C₁₋₁₂ alkoxy;
   n is from 0 to 4; and
   R⁶ is a substituent that is the same or different, at from 0 to 4 positions of the 2-hydroxyphenyl portion of Formula I, and is independently chosen from hydroxyl, halogen, C₁₋₁₂ hydrocarbyl, C₁₋₁₂ alkoxy, C₁₋₁₂ alkoxyester, C₂₋₁₂ alkanoyl and phenyl; and
ii) at least one ultraviolet light stabilizer selected from tetramethyl-4-piperidinyl compounds (II) according to Formula II 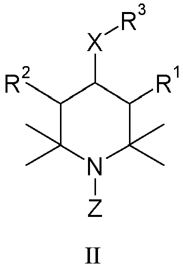 wherein:
   X represents a bridging group selected from the group of -O-C(=O)-, -CR'₂-C(=O)-, -CR'₂-C(=O)-NR'-, -NR'-C(=O)- , -C(=O)-NR'-, -O-, -NR'- or -C(=O)- where each R', independently, represents H or C₁₋₂₀ hydrocarbyl,
   Z represents H, -R, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl,
   R³ is a C₆₋₃₀ hydrocarbyl, and
   each of R¹ and R² is, independently, chosen from H and C₁-C₆ alkyl; and
iii) at least one light stabilizer (III) chosen from hindered amine light stabilizers (HALS) different from compound of formula II.

The present invention further relates to polyolefin film having a thickness of 1 to 350 micron comprising a stabilizer composition comprising
i) at least one o-hydroxyphenyl triazine ultraviolet light absorber (I) selected from 2-(2'-hydroxyphenyl)-1,3,5-triazine compounds according to Formula I: 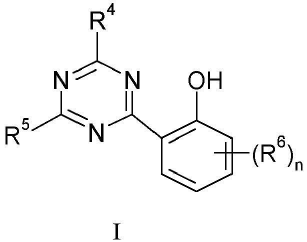 wherein:
   each of R⁴ and R⁵ is, independently, chosen from C₆₋₁₀ aryl; or C₆₋₁₀ aryl substituted by one to three of : hydroxyl, halogen, C₁₋₁₂ hydrocarbyl, C₁₋₁₂ alkoxy, C₁₋₁₂ alkoxyester, C₂₋₁₂ alkanoyl , phenyl or by phenyl substituted by one to three of : hydroxyl, halogen, C₁₋₁₂ hydrocarbyl, C₁₋₁₂ alkoxy, C₁₋₁₂ alkoxyester, and C₂₋₁₂ alkanoyl, or by mixtures thereof; or mono- or di-C₁₋₁₂ hydrocarbyl-substituted amino; or C₂₋₁₂ alkanoyl ; or C₁₋₁₂ alkyl; or C₁₋₁₂ alkoxy;
   n is from 0 to 4; and
   R⁶ is a substituent that is the same or different, at from 0 to 4 positions of the 2-hydroxyphenyl portion of Formula I, and is independently chosen from hydroxyl, halogen, C₁₋₁₂ hydrocarbyl, C₁₋₁₂ alkoxy, C₁₋₁₂ alkoxyester, C₂₋₁₂ alkanoyl and phenyl; and
ii) at least one ultraviolet light stabilizer selected from tetramethyl-4-piperidinyl compounds (II) according to Formula II 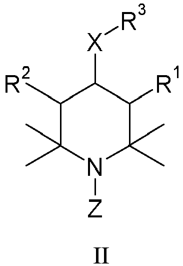 wherein:
   X represents a bridging group selected from the group of -O-C(=O)-, -CR'₂-C(=O)-, -CR'₂-C(=O)-NR'-, -NR'-C(=O)- , -C(=O)-NR'-, -O-, -NR'- or -C(=O)- where each R', independently, represents H or C₁₋₂₀ hydrocarbyl,
   Z represents H, -R, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl,
   R³ is a C₆₋₃₀ hydrocarbyl, and
   each of R¹ and R² is, independently, chosen from H and C₁-C₆ alkyl; and
iii) at least one light stabilizer (III) chosen from hindered amine light stabilizers (HALS) different from compound of formula II.

By hydrocarbyl is meant in the present description a univalent radical derived from a hydrocarbon, i.e. compounds comprising carbon and hydrogen, and include aliphatic hydrocarbons such as alkyls, alkenyls, as well as cyclic compounds, such as alicyclic compounds and aryl compounds, as well as combinations thereof. By substituted is meant to designate in the present invention, hydrocarbyl groups wherein one or more hydrogen or one or more carbon atom are replaced by another atom or group. By optionally substituted is meant to designate both unsubstituted and substituted moieties.

The polyolefin films according to the invention are comprised of at least one homo- or copolymer based on at least one acyclic olefin, such as ethylene and propylene. Suitable homopolymers include homopolymers of ethylene and propylene. Suitable copolymers include copolymers of ethylene with other acyclic olefins such as propylene, butenes (n- and isobutylene), pentenes (such as 1-pentene and isopentene), hexenes (e.g. 4-methyl-1-pentene, 1-hexene) octenes (e.g. 1-octene), etc. and/or other copolymerizable monomers such at vinyl acetate, ethyl acrylate, n-butyl acrylate and methyl acrylate. The preferred polyolefins do not contain cycloolefins. Mixtures of different polyolefin homopolymers and/or copolymers can be used. The polyolefins can be produced by polymerization of one or more acyclic olefin using Ziegler Natta catalysts, Chromium oxide catalysts, single site or metallocene catalysts. The polymers may be made by slurry, gas phase, fluid bed gas phase, solution processes or by high pressure polymerization or combinations thereof

Preferred polyolefin films are films made of polyethylene, such as low density polyethylene (LDPE), linear low density polyethylene (LLDPE), polyethylene obtained with metallocene catalysts (mPE) and high density polyethylene (HDPE), polypropylene and ethylene based copolymers, in particular ethylene-vinylacetate copolymers (EVA), ethylene ethylacrylate copolymers (EEA), ethylene butylacrylate copolymers (EBA) and ethylene methacrylate copolymers (EMA), as well as blends thereof Particularly preferred are films manufactured of LDPE, of LLDPE, of mPE and blends thereof, of EVA and their blends with LDPE and/or LLDPE, of EBA and their blends with LDPE and/or LLDPE.

By polyolefin films is meant to designate in the present invention both monolayer and multilayer films. The polyolefin films may also be part of a multilayer film comprising one or more layers of a polyolefin film according to the invention and one or more layer of other types of film, such as for example a polyamide film.

The polyolefin films according to the invention film usually have a thickness of 1 to 350 micron. They preferably have a thickness of at least 10 microns, more preferably of at least 12 microns. The polyolefin films preferably have a thickness of at most 300 microns, and most preferably, a maximum thickness of 250 microns. The thickness of the films is generally measured according to ISO 4591 and ISO 4593.

In case the polyolefin films according to the invention are used as greenhouse films or tunnel films or solarization films, the polyolefin films are preferably transparent, in particular having a total visible light transmission of at least 80 % as measured according to the EN 2155-5 test method. The films according to the invention more preferably have a total visible light transmission of at least 86 %.

The ultraviolet light absorber selected from 2-(2'-hydroxyphenyl)-1,3,5-triazine compounds (I) according to Formula I is preferably a compound wherein each of R⁴ and R⁵ is, independently, chosen from C₆₋₁₀ aryl or C₆₋₁₀ aryl substituted by one to three of: hydroxyl, C₁₋₁₂ hydrocarbyl, or by phenyl or by mixtures thereof; n is 1; and R⁶ is a substituent chosen from C₁₋₁₂ alkoxy.

Suitable ultraviolet light absorbers are selected from 4,6-bis-(2,4-dimethylphenyl)-2-(2-hydroxy-4-octyloxyphenyl)-s-triazine (CYASORB^{®}UV-1164 light absorber available from Cytec Industries Inc.); 4,6-bis-(2,4-dimethylphenyl)-2-(2,4- dihydroxyphenyl)-s-triazine; 2,4-bis(2,4-dihydroxyphenyl)-6-(4-chlorophenyl)-s-triazine; 2,4-bis[2-hydroxy-4-(2-hydroxy-ethoxy)phenyl]-6-(4-chlorophenyl)-s-triazine; 2,4-bis[2-hydroxy-4-(2-hydroxy-4-(2-hydroxy-ethoxy)phenyl]-6-(2,4-dimethylphenyl)-s-triazine; 2,4-bis[2-hydroxy-4-(2-hydroxyethoxy)phenyl]-6-(4-bromophenyl)-s-triazine; 2,4-bis[2-hydroxy-4-(2-acetoxyethoxy)phenyl]-6-(4-chlorophenyl)-s-triazine; 2,4-bis(2,4-dihydroxyphenyl)-6-(2,4-dimethylphenyl)-s-triazine; 2,4-bis(4-biphenylyl)-6-[2-hydroxy-4-[(octyloxycarbonyl)ethylideneoxy]phenyl]-s-triazine; 2,4-bis(4-biphenylyl)-6-[2-hydroxy-4-(2-ethylhexyloxy)phenyl]-s-triazine; 2-phenyl-4-[2-hydroxy-4-(3-sec-butyloxy-2-hydroxypropyloxy)phenyl]-6-[2-hydroxy-4-(3-sec-amyloxy-2-hydroxypropyloxy)phenyl]-s-triazine; 2,4-bis(2,4-dimethylphenyl)-6-[2-hydroxy-4(-3-benzyloxy-2-hydroxypropyloxy)phenyl]-s-triazine; 2,4-bis(2-hydroxy-4-n-butyloxyphenyl)-6-(2,4-di-n-butyloxyphenyl)-s-triazine; 2,4-bis(2,4-dimethylphenyl)-6-[2-hydroxy-4-(3-nonyloxy-2-hydroxypropyloxy)-5-α-cumylphenyl]-s-triazine; 2,4,6-tris(2-hydroxy-4-isooctyloxycarbonyliso-propylideneoxy-phenyl)-s-triazine; 2,4-bis(2,4-dimethylphenyl)-6-(2-hydroxy-4-hexyloxy-5-α-cumylphenyl)-s-triazine; 2-(2,4,6-trimethylphenyl)-4,6-bis[2-hydroxy-4-(3-butyloxy-2-hydroxypropyloxy)phenyl]-s-triazine; 2,4,6-tris[2-hydroxy-4-(3-sec-butyloxy-2-hydroxypropyloxy)-phenyl]-s-triazine; 4,6-bis-(2,4-dimethylphenyl)-2-(2-hydroxy-4-(3-dodecyloxy-2-hydroxypropoxy)phenyl)-s-triazine; 4,6-bis-(2,4-dimethylphenyl)-2-(2-hydroxy-4-(3-tridecyloxy-2-hydroxypropoxy)phenyl)-s-triazine ; 4,6-bis-(2,4-dimethylphenyl)-2-(2-hydroxy-4(3-(2-ethylhexyloxy)-2-hydroxypropoxy)-phenyl)-s-triazine; 4,6-diphenyl-2-(4-hexyloxy-2-hydroxyphenyl)-s-triazine; 2-(4,6-diphenyl-1,3,5-triazin-2-yl)-5-[2-(2-ethylhexanoyloxy)ethoxy]phenol; 2,4,6-tris(2-hydroxy-4-octyloxyphenyl)-1,3,5-triazine; propanoic acid, 2,2',2"-[1,3,5-triazine-2,4,6-triyltris[(3-hydroxy-4,1-phenylene)oxy]]tris-1,1',1"-trioctyl ester; propanoic acid, 2-[4-[4,6-bis([1,1'-biphenyl]-4-yl)-1,3,5-triazin-2yl]-3-hydroxyphenoxy]-isooctyl ester; 2,4-bis(4-biphenylyl)-6-[2-hydroxy-4-(2-ethylhexyloxy)phenyl]-1,3,5-triazine; and combinations thereof.

Preferred ultraviolet light absorbers (I) are 4,6-bis-(2,4-dimethylphenyl)-2-(2-hydroxy-4-octyloxyphenyl)-s-triazine (commercialized as CYASORB^{®}UV-1164 light absorber); 4,6-diphenyl-2-(4-hexyloxy-2-hydroxyphenyl)-s-triazine (commercialized as TINUVIN^{®}1577); 4,6-bis-(2,4-dimethylphenyl)-2-(2-hydroxy-4-(3-dodecyloxy-2-hydroxypropoxy)phenyl)-s-triazine and 4,6-bis-(2,4-dimethylphenyl)-2-(2-hydroxy-4-(3-tridecyloxy-2-hydroxypropoxy)phenyl)-s-triazine and mixtures thereof (commercialized as TINUVIN^{®}400-2); propanoic acid, 2-[4-[4,6-bis([1,1'-biphenyl]-4-yl)-1,3,5-triazin-2yl]-3-hydroxyphenoxy]-isooctyl ester (commercialized as TINUVIN^{®}479); UV-absorber TINUVIN^{®}1600; and 2,4-bis(4-biphenylyl)-6-[2-hydroxy-4-(2-ethylhexyloxy)phenyl]-1,3,5-triazine; as well as mixtures thereof.

A particularly preferred ultraviolet light absorber (I) is 4,6-bis-(2,4-dimethylphenyl)-2-(2-hydroxy-4-octyloxyphenyl)-s-triazine (which is commercialized as CYASORB^{®}UV-1164 light absorber by Cytec Industries Inc.).

The amount of ultraviolet light absorber (I) present in the polyolefin is generally from 0.01 to 0.6 % by weight. Preferably the amount of ultraviolet light absorber (I) is at least 0.05 % by weight, more preferably at least 0.1 % by weight. The amount of ultraviolet light absorber (I) preferably does not exceed 0.5 % by weight, more preferably does not exceed 0.4 % by weight, most preferably does not exceed 0.35 % by weight.

In the tetramethyl-4-piperidinyl compounds according to Formula II, X is preferably -O-or -O-C(=O)-. The ultraviolet light stabilizer selected from tetramethyl-4-piperidinyl compounds (II) is more preferably a compound according to Formula II wherein X is -O-C(=O)-according to formula IIa 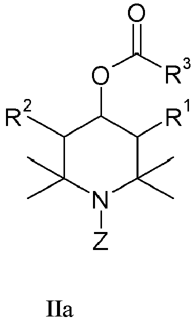 wherein R¹, R², R³ and Z are as defined above.

In the tetramethyl-4-piperidinyl compounds according to Formula II and IIa :
Z is preferably H, a C₁₋₆ alkyl or -OR where R is a C₁₋₁₀ alkyl optionally substituted with hydroxyl, C₁₋₂₂ alkoxy or C₂₋₂₂ alkanoyl ; Z is more preferably H, CH₃ or -O-CH₂-C(OH)(CH₃)-CH₃; Z is most preferably H or CH₃.

In the tetramethyl-4-piperidinyl compounds according to Formula II and IIa, R³ is preferably a C₆₋₃₀ alkyl or C₆₋₃₀ alkenyl, more preferably a C₁₂₋₂₂ alkyl or C₁₂₋₂₂ alkenyl;

In the tetramethyl-4-piperidinyl compounds according to Formula II and IIa, R¹ and R² are preferably H.

The ultraviolet light stabilizer selected from tetramethyl-4-piperidinyl compounds (II) is most preferably a compound according to formula IIb or formula IIc 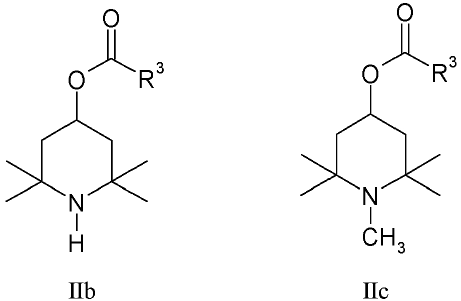 wherein R³ is a C₆₋₃₀ alkyl or C₆₋₃₀ alkenyl, more preferably a C₁₂₋₂₂ alkyl or C₁₂₋₂₂ alkenyl.

The ultraviolet light stabilizer (II) is preferably selected from those of formula II, IIa, IIb and/or IIc wherein R³ is a C₁₆₋₁₈ alkyl or alkenyl.

The ultraviolet light stabilizer (II) is preferably selected from the fatty acid esters of 2,2,6,6-tetramethylpiperidinol, 1,2,2,6,6-pentamethylpiperidinol and 1-alkoxy-2,2,6,6-tetramethylpiperidinols, wherein the alkoxy group contains from 1 to 8 carbon atoms and is optionally substituted with a hydroxyl group, a C₁₋₂₂ alkoxy group or a C₂₋₂₂ alkanoyl group, especially 1-(2-hydroxy-methylpropoxy)- 2,2,6,6-tetramethylpiperidinol. Commercial fatty acids usually contain mixtures of saturated and unsaturated fatty acids. Preferred are C₁₂₋₂₂ alkyl and/or alkenyl fatty acids, more specifically C₁₂₋₂₂ alkyl and C₁₆ and/or C₁₈ alkenyl fatty acids.

Suitable tetramethyl-4-piperidinyl compounds (II) are 2,2,6,6-tetramethylpiperidin-4-yl-docosanoate; 2,2,6,6-tetramethylpiperidin-4-yl-heneicosanoate; 2,2,6,6-tetramethylpiperidin-4-yl-eicosanoate; 2,2,6,6-tetramethylpiperidin-4-yl-octadecanoate; 2,2,6,6- tetramethylpiperidin-4-yl-hexadecanoate; 2,2,6,6-tetramethylpiperidin-4-yl-tetradecanoate; 2,2,6,6-tetramethylpiperidin-4-yl-dodecanoate ; 1,2,2,6,6-pentamethylpiperidin-4-yl-docosanoate; 1,2,2,6,6-pentamethylpiperidin-4-yl-heneicosanoate; 1,2,2,6,6-pentamethylpiperidin-4-yl-eicosanoate; 1,2,2,6,6-pentamethylpiperidin-4-yl-octadecanoate; 1, 2,2,6,6- pentamethylpiperidin-4-yl-hexadecanoate; 1,2,2,6,6-pentamethylpiperidin-4-yl-tetradecanoate; 1,2,2,6,6-pentamethylpiperidin-4-yl-dodecanoate; 1-hexyloxy,2,2,6,6-tetramethylpiperidin-4-yl-docosanoate ; 1-propoxy,2,2,6,6-tetramethylpiperidin-4-yl-docosanoate; 1-cyclohexyloxy,2,2,6,6-tetramethylpiperidin-4-yl-docosanoate; 1-octyloxy,2,2,6,6-tetramethylpiperidin-4-yl-docosanoate; 1-hexyloxy,2,2,6,6-tetramethylpiperidin-4-yl-eicosanoate; 1-propoxy,2,2,6,6-tetramethylpiperidin-4-yl-eicosanoate; 1-cyclohexyloxy,2,2,6,6-tetramethylpiperidin-4-yl-eicosanoate; 1-octyloxy,2,2,6,6-tetramethylpiperidin-4-yl-eicosanoate; 1-hexyloxy,2,2,6,6-tetramethylpiperidin-4-yl- octadecanoate; 1-propoxy,2,2,6,6-tetramethylpiperidin-4-yl- octadecanoate; 1-cyclohexyloxy,2,2,6,6-tetramethylpiperidin-4-yl-octadecanoate; 1-octyloxy,2,2,6,6-tetramethylpiperidin-4-yl- octadecanoate; 1-hexyloxy,2,2,6,6-tetramethylpiperidin-4-yl- hexadecanoate; 1-propoxy,2,2,6,6-tetramethylpiperidin-4-yl-hexadecanoate; 1-cyclohexyloxy,2,2,6,6-tetramethylpiperidin-4-yl- hexadecanoate; 1-octyloxy,2,2,6,6-tetramethylpiperidin-4-yl- hexadecanoate; 1-(2-hydroxy-2-methylpropoxy)-4-docosanoyloxy-2,2,6,6-tetramethylpiperidine; 1-(2-hydroxy-2-methylpropoxy)-4-eicosanoyloxy-2,2,6,6-tetramethylpiperidine; 1-(2-hydroxy-2-methylpropoxy)-4-octadecanoyloxy-2,2,6,6-tetramethylpiperidine; 1-(2-hydroxy-2-methylpropoxy)-4-hexadecanoyloxy-2,2,6,6-tetramethylpiperidine; 1-(4-docosanoyloxy-2,2,6,6-tetramethylpiperidin-1-yloxy)-2-docosanoyloxy-2-methylpropane; 1-(4-eicosanoyloxy-2,2,6,6-tetramethylpiperidin-1-yloxy)-2-eicosanoyloxy-2-methylpropane; 1-(4-octadecanoyloxy-2,2,6,6-tetramethylpiperidin-1-yloxy)-2-octadecanoyloxy-2-methylpropane; 1-(4-hexadecanoyloxy-2,2,6,6-tetramethylpiperidin-1-yloxy)-2-hexadecanoyloxy-2-methylpropane; 1-(2-methoxy-2-methylpropoxy)-4-docosanoyloxy-2,2,6,6-tetramethylpiperidine; 1-(2-propoxy-2-methylpropoxy)-4-docosanoyloxy-2,2,6,6-tetramethylpiperidine; 1-(2-hexyloxy-2-methylpropoxy)-4-docosanoyloxy-2,2,6,6-tetramethylpiperidine; 1-(2-cyclohexyloxy-2-methylpropoxy)-4-docosanoyloxy-2,2,6,6-tetramethylpiperidine; 1-(2-octyloxy-2-methylpropoxy)-4-docosanoyloxy-2,2,6,6-tetramethylpiperidine; 1-(2-hexadecyloxy-2-methylpropoxy)-4-docosanoyloxy-2,2,6,6-tetramethylpiperidine; 1-(2-octadecyloxy-2-methylpropoxy)-4-docosanoyloxy-2,2,6,6-tetramethylpiperidine ; 1-(2-methoxy-2-methylpropoxy)-4-eicosanoyloxy-2,2,6,6-tetramethylpiperidine; 1-(2-propoxy-2-methylpropoxy)-4-eicosanoyloxy-2,2,6,6-tetramethylpiperidine; 1-(2-hexyloxy-2-methylpropoxy)-4- eicosanoyloxy -2,2,6,6-tetramethylpiperidine; 1-(2-cyclohexyloxy-2-methylpropoxy)-4- eicosanoyloxy -2,2,6,6-tetramethylpiperidine; 1-(2-octyloxy-2-methylpropoxy)-4- eicosanoyloxy -2,2,6,6-tetramethylpiperidine; 1-(2-hexadecyloxy-2-methylpropoxy)-4- eicosanoyloxy -2,2,6,6-tetramethylpiperidine; 1-(2-octadecyloxy-2-methylpropoxy)-4- eicosanoyloxy -2,2,6,6-tetramethylpiperidine; 1-(2-methoxy-2-methylpropoxy)-4-octadecanoyloxy-2,2,6,6-tetramethylpiperidine; 1-(2-propoxy-2-methylpropoxy)-4-octadecanoyloxy-2,2,6,6-tetramethylpiperidine; 1-(2-hexyloxy-2-methylpropoxy)-4- octadecanoyloxy -2,2,6,6-tetramethylpiperidine; 1-(2-cyclohexyloxy-2-methylpropoxy)-4- octadecanoyloxy -2,2,6,6-tetramethylpiperidine; 1-(2-octyloxy-2-methylpropoxy)-4- octadecanoyloxy -2,2,6,6-tetramethylpiperidine; 1-(2-hexadecyloxy-2-methylpropoxy)-4- octadecanoyloxy -2,2,6,6-tetramethylpiperidine; 1-(2-octadecyloxy-2-methylpropoxy)-4- octadecanoyloxy -2,2,6,6-tetramethylpiperidine; 1-(2-methoxy-2-methylpropoxy)-4-hexadecanoyloxy-2,2,6,6-tetramethylpiperidine; 1-(2-propoxy-2-methylpropoxy)-4-hexadecanoyloxy-2,2,6,6-tetramethylpiperidine; 1-(2-hexyloxy-2-methylpropoxy)-4-hexadecanoyloxy-2,2,6,6-tetramethylpiperidine ; 1-(2-cyclohexyloxy-2-methylpropoxy)-4- hexadecanoyloxy -2,2,6,6-tetramethylpiperidine; 1-(2-octyloxy-2-methylpropoxy)-4- hexadecanoyloxy -2,2,6,6-tetramethylpiperidine; 1-(2-hexadecyloxy-2-methylpropoxy)-4- hexadecanoyloxy -2,2,6,6-tetramethylpiperidine; 1-(2-octadecyloxy-2-methylpropoxy)-4- hexadecanoyloxy -2,2,6,6-tetramethylpiperidine; 4-stearyloxy-1-octyloxy-2,2,6,6-tetramethylpiperidine; 4-hexadecyloxy-1-octyloxy-2,2,6,6-tetramethylpiperidine; and mixtures thereof.

Preferred tetramethyl-4-piperidinyl compounds (II) are 2,2,6,6-tetramethylpiperidin-4-yl-eicosanoate; 2,2,6,6-tetramethylpiperidin-4-yl-octadecanoate; 2,2,6,6- tetramethylpiperidin-4-yl-hexadecanoate; and mixture thereof; 1,2,2,6,6-pentamethylpiperidin-4-yl-eicosanoate; 1,2,2,6,6-pentamethylpiperidin-4-yl-octadecanoate; 1,2,2,6,6- pentamethylpiperidin-4-yl-hexadecanoate; and mixtures thereof; 1-(2-hydroxy-2-methylpropoxy)-4-eicosanoyloxy-2,2,6,6-tetramethylpiperidine; 1-(2-hydroxy-2-methylpropoxy)-4-octadecanoyloxy-2,2,6,6-tetramethylpiperidine; 1-(2-hydroxy-2-methylpropoxy)-4-hexadecanoyloxy-2,2,6,6-tetramethylpiperidine; and mixtures thereof; 1-(4-eicosanoyloxy-2,2,6,6-tetramethylpiperidin-1-yloxy)-2-eicosanoyloxy-2-methylpropane; 1-(4-octadecanoyloxy-2,2,6,6-tetramethylpiperidin-1-yloxy)-2-octadecanoyloxy-2-methylpropane; 1-(4-hexadecanoyloxy-2,2,6,6-tetramethylpiperidin-1-yloxy)-2-hexadecanoyloxy-2-methylpropane; and mixtures thereof ; 1-(2-propoxy-2-methylpropoxy)-4-eicosanoyloxy-2,2,6,6-tetramethylpiperidine; 1-(2-hexyloxy-2-methylpropoxy)-4- eicosanoyloxy -2,2,6,6-tetramethylpiperidine; 1-(2-cyclohexyloxy-2-methylpropoxy)-4- eicosanoyloxy -2,2,6,6-tetramethylpiperidine; 1-(2-octyloxy-2-methylpropoxy)-4- eicosanoyloxy -2,2,6,6-tetramethylpiperidine; 1-(2-propoxy-2-methylpropoxy)-4-octadecanoyloxy-2,2,6,6-tetramethylpiperidine; 1-(2-hexyloxy-2-methylpropoxy)-4- octadecanoyloxy -2,2,6,6-tetramethylpiperidine; 1-(2-cyclohexyloxy-2-methylpropoxy)-4- octadecanoyloxy -2,2,6,6-tetramethylpiperidine; 1-(2-octyloxy-2-methylpropoxy)-4- octadecanoyloxy -2,2,6,6-tetramethylpiperidine; 1-(2-propoxy-2-methylpropoxy)-4-hexadecanoyloxy-2,2,6,6-tetramethylpiperidine; 1-(2-hexyloxy-2-methylpropoxy)-4-hexadecanoyloxy-2,2,6,6-tetramethylpiperidine; 1-(2-cyclohexyloxy-2-methylpropoxy)-4- hexadecanoyloxy -2,2,6,6-tetramethylpiperidine; 1-(2-octyloxy-2-methylpropoxy)-4- hexadecanoyloxy -2,2,6,6-tetramethylpiperidine; and mixtures thereof

More preferred tetramethyl-4-piperidinyl compounds (II) are 2,2,6,6-tetramethylpiperidin-4-yl-octadecanoate; 2,2,6,6- tetramethylpiperidin-4-yl-hexadecanoate; and mixtures thereof; 1,2,2,6,6-pentamethylpiperidin-4-yl-octadecanoate; 1,2,2,6,6-pentamethylpiperidin-4-yl-hexadecanoate; and mixtures thereof; 1-(2-hydroxy-2-methylpropoxy)-4-eicosanoyloxy-2,2,6,6-tetramethylpiperidine; 1-(2-hydroxy-2-methylpropoxy)-4-octadecanoyloxy-2,2,6,6-tetramethylpiperidine; 1-(2-hydroxy-2-methylpropoxy)-4-hexadecanoyloxy-2,2,6,6-tetramethylpiperidine; 1-(4-octadecanoyloxy-2,2,6,6-tetramethylpiperidin-1-yloxy)-2-octadecanoyloxy-2-methylpropane; 1-(4-hexadecanoyloxy-2,2,6,6-tetramethylpiperidin-1-yloxy)-2-hexadecanoyloxy-2-methylpropane; 1-(2-hexyloxy-2-methylpropoxy)-4- octadecanoyloxy -2,2,6,6-tetramethylpiperidine; 1-(2-cyclohexyloxy-2-methylpropoxy)-4- octadecanoyloxy -2,2,6,6-tetramethylpiperidine; 1-(2-octyloxy-2-methylpropoxy)-4- octadecanoyloxy -2,2,6,6-tetramethylpiperidine; 1-(2-hexyloxy-2-methylpropoxy)-4-hexadecanoyloxy-2,2,6,6-tetramethylpiperidine; 1-(2-cyclohexyloxy-2-methylpropoxy)-4- hexadecanoyloxy -2,2,6,6-tetramethylpiperidine; 1-(2-octyloxy-2-methylpropoxy)-4- hexadecanoyloxy -2,2,6,6-tetramethylpiperidine; and mixtures thereof

Most preferred tetramethyl-4-piperidinyl compounds (II) are 2,2,6,6-tetramethylpiperidin-4-yl-octadecanoate; 2,2,6,6- tetramethylpiperidin-4-yl-hexadecanoate; and mixtures thereof; 1,2,2,6,6-pentamethylpiperidin-4-yl-octadecanoate; 1,2,2,6,6-pentamethylpiperidin-4-yl-hexadecanoate; and mixtures thereof. Particularly preferred is the UV stabilizer commercialized as CYASORB^{®}UV-3853 light stabilizer by Cytec Industries Inc., which predominantly contains a mixture of C₁₆₋₁₈ fatty acid esters of 2,2,6,6-tetramethylpiperidinol.

The amount of ultraviolet light stabilizer selected from tetramethyl-4-piperidinyl compounds (II) present in the polyolefin film is generally from 0.02 to 0.9 % by weight. Preferably the amount of ultraviolet light stabilizer (II) is at least 0.1 % by weight, more preferably at least 0.3 % by weight. The amount of ultraviolet light stabilizer (II) preferably does not exceed 0. 8% by weight.

The light stabilizer (III) chosen from hindered amine light stabilizers (HALS) different from compound of formula (II) is preferably chosen from monomeric and oligomeric HALS having a number average molecular weight (Mn) of at least 900. In the present invention, by oligomeric HALS it is intended to designate compounds comprising at least 2 repeating units and hence also to include HALS that are sometimes designated as being "polymeric" HALS.

The light stabilizer (III) is preferably chosen from those comprising at least one molecular fragment according to Formula IV 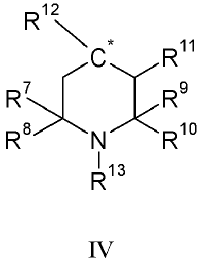 wherein
each of R⁷, R⁸, R⁹ and R¹⁰ is, independently, chosen from C₁-C₂₀ hydrocarbyl, with the proviso that R⁷ and R⁸ and/or R⁹ and R¹⁰ taken together with the carbon to which they are attached may form a C₅₋₁₀ cycloalkyl;
R¹¹ is chosen from: H and C₁-C₈ hydrocarbyl;
R¹² is chosen from: H and C₁-C₈ hydrocarbyl;
R¹³ represents H, -OH, -CH₂CN, C₁₋₂₀ hydrocarbyl, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl; and
the molecular fragment is bonded to the rest of the compound via the carbon atom marked * with the proviso that the molecular fragment can form a spiro structure with the rest of the compound so that R¹² does not exist;
and/or to Formula V 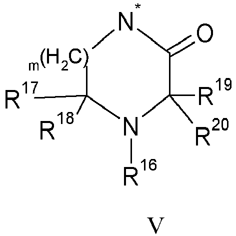 wherein
m is an integer from 1 to 2;
each of R¹⁷, R¹⁸, R¹⁹ and R²⁰ is, independently, chosen from C₁-C₂₀ hydrocarbyl, with the proviso that R¹⁷ and R¹⁸ and/or R¹⁹ and R²⁰ taken together with the carbon to which they are attached may form a C₅₋₁₀ cycloalkyl;
R¹⁶ represents H, -OH, -CH₂CN, C₁₋₂₀ hydrocarbyl, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl; and
the molecular fragment is bonded to the rest of the compound via the nitrogen atom marked *.

Suitable light stabilizers (III) include poly[(6-[(1,1,3,3-tetramethylbuty)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]) ; 1,6-hexanediamine, N,N'-bis(2,2,6,6-tetramethyl-4-piperidinyl)-, polymers with 2,4-dichloro-6-(4-morpholinyl)-1,3,5-triazine ; 1,6-hexanediamine, N,N'-bis(2,2,6,6-tetramethyl-4-piperidinyl)-, polymers with morpholine-2,4,6-trichloro-1,3,5-triazine reaction products, methylated ; 1,6-hexanediamine, N,N'-bis(2,2,6,6-tetramethyl-4-piperidinyl)-, polymer with 2,4,6-trichloro-1,3,5-triazine, reaction products with 3-bromo-1-propene, N-butyl-1-butanamine and N-butyl-2,2,6,6-tetramethyl-4-piperidinamine, oxidized, hydrogenated ; N,N',N",N'"-tetrakis(4,6-bis(butyl-(N-methyl-2,2,6,6-tetramethylpiperldin-4-yl)amino)triazin-2-yl)-4,7-diazadecane-1,10-diamine; butanedioc acid, dimethylester, polymer with 4-hydroxy-2,2,6,6-tetramethyl-1-piperidine ethanol; 1,6-hexanediamine, N,N'-bis(2,2,6,6-tetramethyl-4-piperidinyl)-, polymer with 2,4,6-trichloro-1,3,5-triazine, reaction products with, N-butyl-1-butanamine and N-butyl-2,2,6,6-tetramethyl-4-piperidinamine ; polymer of 2,2,4,4-tetramethyl-7-oxa-3.20-diaza-20 (2,3-epoxi-propyl)-dispiro[5.1.11.2]-heneicosane-21-on; a copolymer of mixed C20 to C24 alpha-olefins and (2,2,6,6-tetramethylpiperidin-4-yl)succinimide ; 1,2,3,4-butanetetracarboxylicacid, mixed 1,2,2,6,6-pentamethyl-4-piperidinyl and tridecyltetraesters; 1,2,3,4-butanetetracarboxylic acid, 1,2,2,6,6-pentamethyl-4-piperdinyl tridecyl ester ; 1,2,3,4-butanetetracarboxylic acid, polymer with 2,2-bis(hydroxymethyl)-1,3-propanediol and 3-hydroxy-2,2-dimethylpropanal, 1,2,2,6,6-pentamethyl-4-piperidinyl ester ; 1,2,3,4-butanetetracarboxylic acid polymer with 2,2-bis(hydroxymethyl)-1,3-propane- diol and 3-hydroxy-2,2-dimethylpropanal, 2,2,6,6-tetramethyl-4-piperidinyl ester 1,2,3,4-butanetetracarboxylic acid polymer with 2,2-bis(hydroxymethyl)-1,3-propane- diol and 3-hydroxy-2,2-dimethylpropanal, 2,2,6,6-tetramethyl-4-piperidinyl ester ; 1,3-propanediamine, N,N" -1,2-ethanediylbis-, polymer with 2,4,6-trichloro-1,3,5-triazine, reaction products with N-butyl-2,2,6,6-tetramethyl-4-piperidinamine ; 2,2,6,6-tetramethyl-4-piperidinyl ester of C12-C22 saturated and C18-unsaturated fatty acid reacted with oxidized polyethylene ; 2-piperazinone,1,1',1"-[1,3,5-triazine-2,4,6-triyltris[(cyclohexylimino)-2,1-ethanediyl]]tris[3,3,4,5,5-pentamethyl-; 2-piperazinone,1,1',1"-[1,3,5-triazine-2,4,6-triyltris[(cyclohexylimino)-2,1-ethanediyl]]tris[3,3, 5,5-tetramethyl-; poly[4-hydroxy-1-(2-hydroxyethoxy)-2,2,6,6-tetramethylpiperidin-4-yl succinate]; 2-[(2-hydroxyethyl)amino]-4,6-bis[N-(1-cyclohexyloxy-2,2,6,6-tetramethylpiperidin-4-yl)butylamino-1,3,5-triazine; the condensate of N,N'-bis(2,2,6,6-tetramethylpiperidin-4-yl)hexamethylenediamine and 4-cyclohexylamino-2,6-dichloro-1,3,5-triazine; the copolymer of methylmethacrylate with ethyl acrylate and 2,2,6,6-tetramethylpiperidin-4-yl acrylate; polymethyl[propyl-3-oxy(2',2',6',6'-tetramethyl-4,4'-piperidinyl)]siloxane; polymethyl[propyl-3-oxy(1',2',2',6',6'-pentamethyl-4,4'-piperidinyl)]siloxane ; the condensate of 1,2-bis(3-aminopropylamino)ethane-2,4,6-trichloro-1,3,5-triazine and 4-butylamino-2,2,6,6-tetramethylpiperidine; the copolymer of ethylene and the esterification product of 2,2,6,6-tetramethyl-4-piperidinol and acrylic acid; the copolymer of ethylene and the esterification product of 1,2,2,6,6-pentamethyl-4-piperidinol and acrylic acid; the condensate of 2-chloro-4,6-bis(4-n-butylamino-1,2,2,6,6-pentamethylpiperidyl)-1,3,5-triazine and 1,2-bis-(3-aminopropylamino)ethane; 1,3,5-triazine-2,4,6-triamine, N,N"'-1,2-ethanediylbis(N-(3-((4,6-bis(butyl(2,2,6,6-tetramethyl-4-piperidinyl)amino)-1,3,5-triazin-2-yl)amino)propyl)-N,N"-bis)(2,2,6,6-tetramethyl-4-piperidinyl)-; N,N bis(2,2,6,6-tetramethyl-4-piperidyl) hexamethylenediamine-1,2-dibromoethane,copolymer; and mixtures thereof.

Preferred UV-stabilizers (III) are selected from 1,6-hexanediamine, N,N'-bis(2,2,6,6-tetramethyl-4-piperidinyl)-, polymers with morpholine-2,4,6-trichloro-1,3,5-triazine reaction products, methylated ; 1,6-hexanediamine, N,N'-bis(2,2,6,6-tetramethyl-4-piperidinyl)-, polymers with 2,4-dichloro-6-(4-morpholinyl)-1,3,5-triazine ; poly[(6-[(1,1,3,3-tetramethylbuty)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino]]); butanedioc acid, dimethylester, polymer with 4-hydroxy-2,2,6,6-tetramethyl-1-piperidine ethanol ; 1,6-hexanediamine, N,N'-bis(2,2,6,6-tetramethyl-4-piperidinyl)-, polymer with 2,4,6-trichloro-1,3,5-triazine, reaction products with, N-butyl-1-butanamine and N-butyl-2,2,6,6-tetramethyl-4-piperidinamine; 2-[(2-hydroxyethyl)amino]-4,6-bis[N-(1-cyclohexyloxy-2,2,6,6-tetramethylpiperidin-4-yl)butylamino-1,3,5-triazine ; 1,6-hexanediamine, N,N'-bis(2,2,6,6-tetramethyl-4-piperidinyl)-, polymer with 2,4,6-trichloro-1,3,5-triazine, reaction products with 3-bromo-1-propene, N-butyl-1-butanamine and N-butyl-2,2,6,6-tetramethyl-4-piperidinamine, oxidized, hydrogenated ; 1,3,5-triazine-2,4,6-triamine,N,N'"-[1,2-ethane-diyl-bis [[[4,6-bis-[butyl-(1,2,2,6,6-pentamethyl-4-piperidinyl)amino]-1,3,5-triazine-2-yl] imino]-3,1-propanediyl]] bis-[N',N"-dibutyl-N',N"-bis(1,2,2,6,6-pentamethyl-4-piperidinyl)-; 1,3,5-triazine-2,4,6-triamine, N,N"'-1,2-ethanediylbis(N-(3-((4,6-bis(butyl(2,2,6,6-tetramethyl-4-piperidinyl)amino)-1,3,5-triazin-2-yl)amino)propyl)-N,N"-bis)(2,2,6,6-tetramethyl-4-piperidinyl)-; a condensate of N,N'-bis(2,2,6,6-tetramethylpiperidin-4-yl)hexamethylenediamine and 4-cyclohexylamino-2,6-dichloro-1,3,5-triazine; N,N bis(2,2,6,6-tetramethyl-4-piperidyl) hexamethylenediamine-1,2-dibromoethane,copolymer ; polymer of 2,2,4,4-tetramethyl-7-oxa-3.20-diaza-20 (2,3-epoxipropyl)-dispiro[5.1.11.2]-heneicosane-21-on; 1,3-propanediamine, N,N" -1,2-ethanediylbis-, polymer with 2,4,6-trichloro-1,3,5-triazine, reaction products with N-butyl-2,2,6,6-tetramethyl-4-piperidinamine; a copolymer of mixed C20 to C24 alpha-olefins and (2,2,6,6-tetramethylpiperidin-4-yl)succinimide ; 1,2,3,4-butanetetracarboxylic acid, polymer with 2,2-bis(hydroxymethyl)-1,3-propanediol and 3-hydroxy-2,2-dimethylpropanal, 1,2,2,6,6-pentamethyl-4-piperidinyl ester ; 1,2,3,4-butanetetracarboxylic acid polymer with 2,2-bis(hydroxymethyl)-1,3-propane- diol and 3-hydroxy-2,2-dimethylpropanal, 2,2,6,6-tetramethyl-4-piperidinyl ester ; copolymer of methylmethacrylate with ethyl acrylate and 2,2,6,6-tetramethylpiperidin-4-yl acrylate ; polymethyl[propyl-3-oxy(2',2',6',6'-tetramethyl-4,4'-piperidinyl)]siloxane; polymethyl[propyl-3-oxy(1',2',2',6',6'-pentamethyl-4,4'-piperidinyl)]siloxane; the condensate of 2-chloro-4,6-bis(4-n-butylamino-1,2,2,6,6-pentamethylpiperidyl)-1,3,5-triazine and 1,2-bis-(3-aminopropylamino)ethane; the condensate of 1,2-bis(3-aminopropylamino)ethane-2,4,6-trichloro-1,3,5-triazine and 4-butylamino-2,2,6,6-tetramethylpiperidine; a copolymer of ethylene and the esterification product of 2,2,6,6-tetramethyl-4-piperidinol and acrylic acid ; a copolymer of ethylene and the esterification product of 1,2,2,6,6-pentamethyl-4-piperidinol and acrylic acid; poly[4-hydroxy-1-(2-hydroxyethoxy)-2,2,6,6-tetramethylpiperidin-4-yl succinate]; and mixtures thereof.

UV-stabilizers (III) are more preferably selected from 1,6-hexanediamine, N,N'-bis(2,2,6,6-tetramethyl-4-piperidinyl)-, polymers with 2,4-dichloro-6-(4-morpholinyl)-1,3,5-triazine; 1,6-hexanediamine, N,N'-bis(2,2,6,6-tetramethyl-4-piperidinyl)-, polymers with morpholine-2,4,6-trichloro-1,3,5-triazine reaction products, methylated ; 1,6-hexanediamine, N,N'-bis(2,2,6,6-tetramethyl-4-piperidinyl)-, polymer with 2,4,6-trichloro-1,3,5-triazine, reaction products with 3-bromo-1-propene, N-butyl-1-butanamine and N-butyl-2,2,6,6-tetramethyl-4-piperidinamine, oxidized, hydrogenated ; 1,3,5-triazine-2,4,6-triamine,N,N"'-[1,2-ethane-diyl-bis [[[4,6-bis-[butyl-(1,2,2,6,6-pentamethyl-4-piperidinyl)amino]-1,3,5-triazine-2-yl] imino]-3,1-propanediyl]] bis-[N',N"-dibutyl-N',N"-bis(1,2,2,6,6-pentamethyl-4-piperidinyl)-; butanedioc acid, dimethylester, polymer with 4-hydroxy-2,2,6,6-tetramethyl-1-piperidine ethanol; 1,6-hexanediamine, N,N'-bis(2,2,6,6-tetramethyl-4-piperidinyl)-, polymer with 2,4,6-trichloro-1,3,5-triazine, reaction products with, N-butyl-1-butanamine and N-butyl-2,2,6,6-tetramethyl-4-piperidinamine; 1,2,3,4-butanetetracarboxylicacid, mixed 1,2,2,6,6-pentamethyl-4-piperidinyl and tridecyltetraesters; 1,2,3,4-butanetetracarboxylic acid, polymer with 2,2-bis(hydroxymethyl)-1,3-propanediol and 3-hydroxy-2,2-dimethylpropanal, 1,2,2,6,6-pentamethyl-4-piperidinyl ester; 2,2,6,6-tetramethyl-4-piperidinyl ester of C12-21,C18-unsaturated fatty acid reacted with oxidized polyethylene; poly[4-hydroxy-1-(2-hydroxyethoxy)-2,2,6,6-tetramethylpiperidin-4-yl succinate]; and mixtures thereof.

The light stabilizer (III) chosen from hindered amine light stabilizers (HALS) different from compound (II) is preferably chosen from monomeric and oligomeric HALS having a number average molecular weight (Mn) of at least 900, more preferably from oligomeric HALS having a Mn of higher than 1500 but not more than 4500, more preferably not more than 3000.

Most preferred light stabilizer (III) is 1,6-hexanediamine, N,N'-bis(2,2,6,6-tetramethyl-4-piperidinyl)-, polymers with morpholine-2,4,6-trichloro-1,3,5-triazine reaction products, methylated, which is commercially available as CYASORB^{®}UV-3529 light stabilizer from Cytec Industries Inc.; or a mixture of 1,6-hexanediamine, N,N'-bis(2,2,6,6-tetramethyl-4-piperidinyl)-, polymers with 2,4-dichloro-6-(4-morpholinyl)-1,3,5-triazine and 1,6-hexanediamine, N,N'-bis(2,2,6,6-tetramethyl-4-piperidinyl)-, polymers with morpholine-2,4,6-trichloro-1,3,5-triazine reaction products, methylated.

The amount of ultraviolet light stabilizer (III) present in the polyolefin film is generally from 0.05 to 2.0 % by weight. Preferably the amount of ultraviolet light stabilizer (III) is at least 0.4 % by weight, more preferably at least 0.6 % by weight. The amount of ultraviolet light stabilizer (III) preferably does not exceed 1.9 % by weight.

The total amount (in weight) of ultraviolet absorber according to formula (I), ultraviolet stabilizer (II) and ultraviolet stabilizer (III) in the polyolefin film is generally at least 0.1 % by weight, preferably at least 0.6 % by weight. The total amount usually does not exceed 2.9 % by weight, preferably it does not exceed 2.5 % by weight.

The amount of ultraviolet light stabilizer (I) present in the polyolefin is preferably from 0.01 to 0.6 % by weight, the amount of ultraviolet light stabilizer (II) present in the polyolefin is preferably from 0.02 to 0.9 % by weight and the amount of light stabilizer (III) present in the polyolefin is preferably from 0.05 to 2.0 % by weight.

The polyolefin films according to the present invention can further contain various conventional additives, such as antioxidants, especially hindered phenolic antioxidants; phosphites; phosphonites; acid scavengers; UV screeners or absorbers, such as benzotriazoles, benzophenones and benzylidene malonates; processing aids; antiblocking agents; antidripping agents; antifogging agents; antimist agents; antidust agents; antifungal agents; photoselective agents; pigments; thermic agents; photo-catalysts ; biodegradable fillers; metal carbonates such as calcium carbonates; etc. and mixtures thereof. The amount of such further additives usually does not exceed 20 % by weight. When used as transparent films, the total amount of further additives preferably does not exceed 15 % by weight of the formulated film.

The polyolefin films according to the invention preferably contains at least one further stabilizer selected from the group consisting of hindered benzoates, phenolic antioxidants, phosphites and phosphonites and mixtures thereof, more preferably in a total amount of from 0.001 to 1.5 % by weight.

The polyolefin films according to the invention more preferably contains at least one further stabilizer selected from the group consisting of hindered benzoates (VI), more specifically from hindered benzoates of formula VI 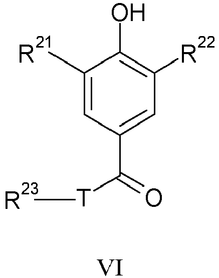 wherein
each of R²¹ and R²² is, independently, chosen from C₁₋₁₂ alkyl,
T represents O or NR²⁴, where R²⁴ is H or C₁₋₃₀ hydrocarbyl,
R²³ is H or C₁₋₃₀ hydrocarbyl.

In the hindered benzoates of formula VI, each of R²¹ and R²² are preferably, independently, chosen from branched alkyls, more preferably from branched C₃₋₆ alkyls

In the hindered benzoates of formula VI, T is preferably O.

In the hindered benzoates of formula VI, R²³ is preferably a C₁₋₃₀ alkyl, C₁₋₃₀ alkenyl or a phenyl substituted with one or more C₁₋₆ alkyl groups.

Suitable hindered benzoates include 2,4-di-tert-butylphenyl-3,5-di-tert-butyl-4-hydroxybenzoate; hexadecyl-3,5-di-tert-butyl-4-hydroxybenzoate; octadecyl-3,5-di-tert-butyl-4-hydroxybenzoate; octyl-3,5-di-tert-butyl-4-hydroxybenzoate; decyl-3,5-di-tert-butyl-4-hydroxybenzoate; dodecyl-3,5-di-tert-butyl-4-hydroxybenzoate; tetradecyl-3,5-di-tert-butyl-4-hydroxybenzoate; behenylyl-3,5-di-tert-butyl-4-hydroxybenzoate; 2-methyl-4,6-di-tert-butylphenyl-3,5-di-tert-butyl-4-hydroxybenzoate; butyl-3-[3-t-butyl-4-(3,5-di-t-butyl-4-hydroxybenzoyloxy)phenyl]propionate; and mixtures thereof

Preferred hindered benzoates are 2,4-di-tert-butylphenyl-3,5-di-tert-butyl-4-hydroxybenzoate and hexadecyl-3,5-di-tert-butyl-4-hydroxybenzoate, as well as mixtures thereof

The amount of hindered benzoate (VI) present in the polyolefin film is preferably from 0.01 to 1 % by weight. More preferably the amount of hindered benzoate (VI) is at least 0.1 % by weight. The amount of hindered benzoate (VI) more preferably does not exceed 0.6 % by weight.

The polyolefin films according to the invention can be obtained by any process suitable for preparing polyolefin films, such as blown film or cast film extrusion.

The films are usually prepared by blending the UV absorber (I), the UV stabilizer (II), the UV stabilizer (III) and optionally further additives with the polyolefin. The stabilizers and optional further additives can be added to the polyolefin in the form of a powder, granules or a masterbatch which contains these components in a concentration that is higher than the final concentration in the film. The components can be blended with the polyolefin separately or two or more components can be mixed with each other before being added to the polyolefin. The components are preferably blended with the polyolefin in a single or twin screw extruder, continuous mixer or other equipment used for compounding additives into polymers. The stabilized polyolefin is then further processed into a film with the desired thickness.

The polyolefin films according to the present invention present a significantly better stability against long term exposure to light, even in the presence of agrochemicals such as sulfur based pesticides, insecticides, fumigants or soil disinfectants, while maintaining other properties required for agricultural films such as optical properties, absence of visible defects, mechanical properties such as tensile properties, impact resistance and elongation, etc. Therefore, the polyolefin films according to the present invention are of particular interest for agricultural applications such as greenhouse films, agricultural films, greenhouse covers, greenhouse double roof films, tunnel films, high tunnel films, low-tunnel films, small tunnel films, polytunnel films, mulch and solarization films. The present invention therefore also relates to the use of polyolefin films as described here above for agricultural applications, especially for those wherein agrochemicals such as pesticides, insecticides, fumigants, and soil disinfectants are used.

The following examples illustrate the invention.

### Example 1

The polyethylene (LDPE) film formulations including the UV stabilizer compositions as described in Table 1 and 0.09 % by weight of a hindered phenol/phosphite antioxidant blend (commercialized as CYANOX^{®}2777 antioxidant) were dry blended with low density polyethylene Westlake LDPE 1810E. The formulations were compounded twice to ensure a proper dispersion. Firstly, the LDPE film formulations were compounded using a Killion single screw extruder set with a 60 mesh screen, at 181 °C, and a screw speed of 100 RPM. Secondly, the compounded LDPE film formulations were extruded to 200 microns LDPE films using the Killion extruder with the film die, and 60 mesh screen running with a melt temperature of 177 °C and a screw speed of 25 RPM.

In order to test the UV performance of the UV stabilizer compositions in the LDPE films, the films were exposed to UV light after periodic treatment with an agrochemical solution. To simulate exposure to agrochemicals in the field, the film samples were treated with a Metham Sodium solution prior to any UV exposure and then were treated again after every 336 hours (every 2nd week) of UV exposure. The film samples were dipped in a 0.5 percent (wt./wt.) solution of Metham Sodium (sodium salt of methyldithiocarbamate) for 2 hours, dried overnight, and then placed in the Q UV-A (Q-Panel fluorescent UV exposure unit). The exposure to the Metham Sodium solution was repeated each 2nd week (336 hours intervals). The residual sulfur content of the formulated LDPE film samples was analyzed by Parr Bomb Prep/IC analysis after each treatment to ensure that the sulfur residues remained on the films.

The film samples were mounted on holders and exposed in a Q-Panel fluorescent UV exposure unit according to the following conditions from ASTM G154: UVA-340 nm lamp, irradiance of 0.77 W/m²/nm at 340 nm, with an exposure cycle of 8 hours of UV at 70 °C black panel temperature followed by 4 hours of condensation at 50 °C black panel temperature.

In order to determine the mechanical properties (e.g. % elongation at break) of the treated and UV exposed LDPE films, samples were cut into dog-bone shaped specimens of type 5B (ISO 527-2) using a punch press after each 336 h interval (Na-Metham treatment followed by UV light exposure). Samples were cut so that the gauge portion of the tensile bar ran perpendicular to the machine direction of the film (i.e. the tensile bars were cut across the machine direction).

Five specimens were cut of each sample. Samples were tested on an MTS tensile tester at 50 mm/min crosshead speed. The median value of the five samples was used for all analyses. To compare the final UV performances of the LDPE film samples, the times (in hours) to 50 percent of retained % elongation (T50) for each of the four formulated 200 microns LDPE film samples was determined. The results obtained are presented in Table 1. Films were classified as failed if they exhibited an elongation value that was 50% or less of the original elongation of the film prior to exposure.

**Table 1**

| | Formulation | T50 (hours) |
|---|---|---|
| 1.1R | 0.2 wt.-% of triazine(1) + 1 wt.-% of oligomeric HALS(2) | 2350 |
| 1.2 | 0.17 wt.-% of triazine(1) + 0.83 wt.-% of oligomeric HALS(2) + 0.3 wt.-% of UV-3853 (3) | 2825 |
| 1.3 | 0.17 wt.-% of triazine(1) + 0.83 wt.-% of oligomeric HALS(2) + 0.7 wt.-% of UV-3853 (3) | 3275 |

| | | |
|---|---|---|
| (1) 4,6-bis-(2,4-dimethylphenyl)-2-(2-hydroxy-4-octyloxyphenyl)-s-triazine (CYASORB^{®}UV-1164 light absorber available from Cytec Industries Inc.) (2) 1,6-hexanediamine, N,N'-bis(2,2,6,6-tetramethyl-4-piperidinyl)-, polymers with morpholine-2,4,6-trichloro-1,3,5-triazine reaction products, methylated (CYASORB^{®}UV-3529 light stabilizer available from Cytec Industries Inc.) (3) UV-3853 = UV stabilizer commercialized as CYASORB^{®}UV-3853 light stabilizer by Cytec Industries Inc., which predominantly contains a mixture of C16-18 fatty acid esters of 2,2,6,6-tetramethylpiperidinol. | | |

As can be seen from the data in Table 1, the LDPE films according to the invention were far superior to the prior-art compositions, providing protection from UV light in a Na-Metham environment.

### Example 2

LDPE films comprising the UV stabilizer compositions as described in Table 2 and 0.09 wt.-% of hindered phenol/phosphite antioxidant blend (commercialized as CYANOX^{®}2777 antioxidant) were prepared as described in Example 1.

In order to test the UV performance of the UV stabilizer compositions in the LDPE films, the films were exposed to UV light after periodic treatment with sulfur vapor generated through sublimation of elemental sulfur. The LDPE film samples were exposed to the vapors of sulfur from sublimed sulfur prior to any UV exposure and then were treated again after every 336 hours (2nd week) of UV exposure. The LDPE film samples were exposed to the vapors of sulfur from sublimed sulfur for 1/2 an hour in a specially designed closed cabinet and then placed in the Q UV-A (Q-Panel fluorescent UV exposure unit). The residual sulfur content of the formulated LDPE film samples was analyzed by Parr Bomb Prep/IC analysis after each treatment to ensure that the sulfur residues remained on the films.

The film samples were mounted on holders and exposed in a Q-Panel fluorescent UV exposure unit according to the following conditions from ASTM G154: UVA-340 nm lamp, irradiance of 0.77 W/m²/nm at 340 nm, with an exposure cycle of 8 hours ofUV at 60 °C black panel temperature followed by 4 hours of condensation at 50 °C black panel temperature.

In order to determine the mechanical properties (e.g. % elongation at break) of the treated and UV exposed LDPE films, samples were cut into dog-bone shaped specimens of type 5B (ISO 527-2) using a punch press after each 336 h interval (sulfur vapor treatment followed by UV light exposure). Samples were cut so that the gauge portion of the tensile bar ran perpendicular to the machine direction of the film (i.e. the tensile bars were cut across the machine direction). Five specimens were cut of each sample. Samples were tested on an MTS tensile tester at 50 mm/min crosshead speed. The median value of the five samples was used for all analyses. To compare the final UV performances of the LDPE film samples, the times (in hours) to 50 percent of retained % elongation (T50) for each 200 microns LDPE film samples was determined. Films were classified as failed if they exhibited an elongation value that was 50% or less of the original elongation of the film prior to exposure. The results are presented in Table 2.

**Table 2**

| | Formulation | T50 (hours) |
|---|---|---|
| 2.1R | 0.28 wt.-% of triazine(1) + 1.42 wt.-% of oligomeric HALS(2) | 2950 |
| 2.2 | 0.2 wt.-% of triazine(1) + 1 wt.-% of oligomeric HALS(2) + 0.5 wt.-% of UV-3853 (3) | 3800 |
| 2.3R | 0.2 wt.-% of triazine(1) + 1 wt.-% of oligomeric HALS(2) + 0.5 wt.-% of TINUVIN^{®}770 | 3150 |
| 2.4R | 0.2 wt.-% of triazine(1) + 1 wt.-% of oligomeric HALS(2) + 0.5 wt.-% of TINUVIN^{®}765 | 2400 |
| 2.5R | 0.2 wt.-% of triazine(1) + 1 wt.-% of oligomeric HALS(2) + 0.5 wt.-% of TINUVIN^{®}123 | 2050 |
| 2.6R | 0.2 wt.-% of triazine(1) + 1.5 wt.-% of oligomeric HALS(2) | 3650 |
| 2.7R | 0.2 wt.-% of triazine(1) + 1 wt.-% of oligomeric HALS(2) + 0.5 wt.-% of CYASORB^{®}UV-3346 light stabilizer | 2350 |
| 2.8R | 0.2 wt.-% of triazine(1) + 1 wt.-% of oligomeric HALS(2) + 0.5 wt.-% of DAMA-10 | 2450 |

| | | |
|---|---|---|
| (1) 4,6-bis-(2,4-dimethylphenyl)-2-(2-hydroxy-4-octyloxyphenyl)-s-triazine (CYASORB^{®}UV-1164 light absorber available from Cytec Industries Inc.) (2)) 1,6-hexanediamine, N,N'-bis(2,2,6,6-tetramethyl-4-piperidinyl)-, polymers with morpholine-2,4,6-trichloro-1,3,5-triazine reaction products, methylated (CYASORB^{®}UV-3529 light stabilizer available from Cytec Industries Inc.) (3) UV-3853 = UV stabilizer commercialized as CYASORB^{®}UV-3853 light stabilizer by Cytec Industries Inc., which predominantly contains a mixture of C16-18 fatty acid esters of 2,2,6,6-tetramethylpiperidinol. TINUVIN^{®}770 = bis(2,2,6,6-tetramethylpiperidin-4-yl) sebacate TINUVIN^{®}765 = bis(1,2,2,6,6-pentamethylpiperidin-4-yl) sebacate TINUVIN^{®}123= bis(1-octyloxy-2,2,6,6-tetramethylpiperidin-4-yl) sebacate CYASORB^{®}UV-3346 light stabilizer = 1,6-hexanediamine, N,N'-bis(2,2,6,6-tetramethyl-4-piperidinyl)-, polymers with 2,4-dichloro-6-(4-morpholinyl)-1,3,5-triazine DAMA-10 = didecylmethylamine | | |

As can be clearly seen from the data in Table 2, the LDPE film according to the invention was far superior to films containing no tetramethyl-4-piperidine compound of formula (II) or wherein the tetramethyl-4-piperidine compound of formula (II) was replaced by other known HALS or by a tertiary amine as described in the prior art, in providing protection from UV light after exposure to vapors of sulfur.

## Claims

1. A method for the stabilization of polyolefin films against degradation in the presence of agrochemicals comprising incorporation into the polyolefin a stabilizer composition comprising
i) at least one o-hydroxyphenyl triazine ultraviolet light absorber (I) selected from 2-(2'-hydroxyphenyl)-1,3,5-triazine compounds according to Formula I: 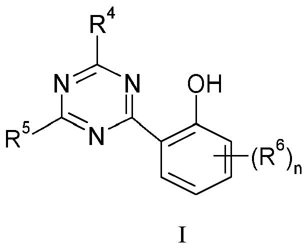 wherein:
each of R⁴ and R⁵ is, independently, chosen from C₆₋₁₀ aryl; or C₆₋₁₀ aryl substituted by one to three of : hydroxyl, halogen, C₁₋₁₂ hydrocarbyl, C₁₋₁₂ alkoxy, C₁₋₁₂ alkoxyester, C₂₋₁₂ alkanoyl, phenyl or by phenyl substituted by one to three of : hydroxyl, halogen, C₁₋₁₂ hydrocarbyl, C₁₋₁₂ alkoxy, C₁₋₁₂ alkoxyester, and C₂₋₁₂ alkanoyl, or by mixtures thereof; or mono- or di-C₁₋₁₂ hydrocarbyl-substituted amino; or C₂₋₁₂ alkanoyl ; or C₁₋₁₂ alkyl; or C₁₋₁₂ alkoxy;
n is from 0 to 4; and
R⁶ is a substituent that is the same or different, at from 0 to 4 positions of the 2-hydroxyphenyl portion of Formula I, and is independently chosen from hydroxyl, halogen, C₁₋₁₂ hydrocarbyl, C₁₋₁₂ alkoxy, C₁₋₁₂ alkoxyester, C₂₋₁₂ alkanoyl and phenyl; and
ii) at least one ultraviolet light stabilizer selected from tetramethyl-4-piperidinyl compounds (II) according to Formula II 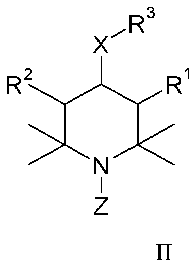 wherein:
X represents a bridging group selected from the group of -O-C(=O)-, -CR'₂-C(=O)-, -CR'₂-C(=O)-NR'-, -NR'-C(=O)- , -C(=O)-NR'-, -O-, -NR'- or -C(=O)- where each R', independently, represents H or C₁₋₂₀ hydrocarbyl,
Z represents H, -R, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl,
R³ is a C₆₋₃₀ hydrocarbyl, and
each of R¹ and R² is, independently, chosen from H and C₁-C₆ alkyl; and
iii) at least one light stabilizer (III) chosen from hindered amine light stabilizers (HALS) different from compound of formula II.

2. The method according to claim 1, wherein the 2-(2'-hydroxyphenyl)-1,3,5-triazine compound (I) is 4,6-bis-(2,4-dimethylphenyl)-2-(2-hydroxy-4-octyloxyphenyl)-s-triazine.

3. The method according to claim 1 or 2, wherein the tetramethyl-4-piperidinyl compound (II) is selected from compounds of formula IIa 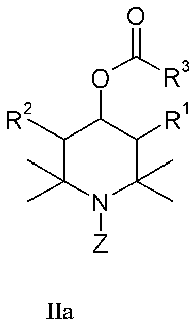 wherein
Z is H, a C₁₋₆ alkyl or -OR where R is a C₁₋₁₀ alkyl optionally substituted with hydroxyl, C₁₋₂₂ alkoxy or C₂₋₂₂ alkanoyl;
R³ is a C₆₋₃₀ alkyl or C₆₋₃₀ alkenyl; and
each of R¹ and R² is, independently, chosen from H and C₁-C₆ alkyl.

4. The method according to any of claims 1 to 3, wherein the tetramethyl-4-piperidinyl compound (II) is selected from those of formula II, IIa, IIb and/or IIc 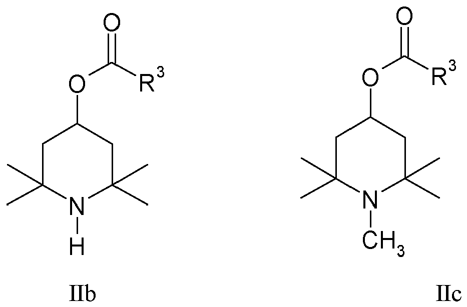 wherein R³ is a C₁₂₋₂₂ alkyl or C₁₂₋₂₂ alkenyl.

5. The method according to any of claims 1 to 4, wherein the tetramethyl-4-piperidinyl compound (II) is selected from 2,2,6,6-tetramethylpiperidin-4-yl-octadecanoate; 2,2,6,6- tetramethylpiperidin-4-yl-hexadecanoate; and mixtures thereof; 1,2,2,6,6-pentamethylpiperidin-4-yl-octadecanoate; 1,2,2,6,6- pentamethylpiperidin-4-yl-hexadecanoate; and mixtures thereof.

6. The method according to any of the preceding claims, wherein the hindered amine light stabilizer compound (III) is selected from those comprising at least one molecular fragment according to Formula IV 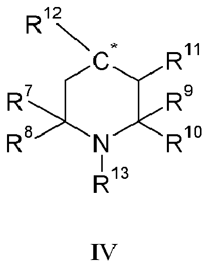 wherein
each of R⁷, R⁸, R9 and R¹⁰ is, independently, chosen from C₁-C₂₀ hydrocarbyl, with the proviso that R⁷ and R⁸ and/or R⁹ and R¹⁰ taken together with the carbon to which they are attached may form a C₅₋₁₀ cycloalkyl;
R¹¹ is chosen from: H and C₁-C₈ hydrocarbyl;
R¹² is chosen from H and C₁-C₈ hydrocarbyl;
R¹³ represents H, -OH, -CH₂CN, C₁₋₂₀ hydrocarbyl, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl; and
the molecular fragment is bonded to the rest of the compound via the carbon atom marked * with the proviso that the molecular fragment can form a spiro structure with the rest of the compound so that R¹² does not exist;
and/or to Formula V 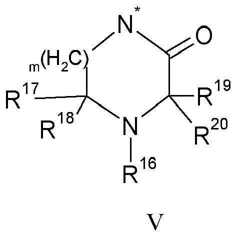 wherein
m is an integer from 1 to 2;
each of R¹⁷, R¹⁸, R¹⁹ and R²⁰ is, independently, chosen from C₁-C₂₀ hydrocarbyl, with the proviso that R¹⁷ and R¹⁸ and/or R¹⁹ and R²⁰ taken together with the carbon to which they are attached may form a C₅₋₁₀ cycloalkyl;
R¹⁶ represents H, -OH, -CH₂CN, C₁₋₂₀ hydrocarbyl, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl; and
the molecular fragment is bonded to the rest of the compound via the nitrogen atom marked *.

7. The method according to any of the preceding claims, wherein the hindered amine light stabilizer (III) is1,6-hexanediamine, N,N'-bis(2,2,6,6-tetramethyl-4-piperidinyl)-, polymers with morpholine-2,4,6-trichloro-1,3,5-triazine reaction products, methylated or a mixture of 1,6-hexanediamine, N,N'-bis(2,2,6,6-tetramethyl-4-piperidinyl)-, polymers with 2,4-dichloro-6-(4-morpholinyl)-1,3,5-triazine and 1,6-hexanediamine, N,N'-bis(2,2,6,6-tetramethyl-4-piperidinyl)-, polymers with morpholine-2,4,6-trichloro-1,3,5-triazine reaction products, methylated.

8. The method according to any of the preceding claims, wherein the amount of ultraviolet light stabilizer (I) present in the polyolefin is from 0.01 to 0.6 % by weight, the amount of ultraviolet light stabilizer (II) present in the polyolefin is from 0.02 to 0.9 % by weight and the amount of light stabilizer (III) present in the polyolefin is from 0.05 to 2.0 % by weight.

9. The method according to any of the preceding claims, incorporating at least one further stabilizer selected from the group consisting of hindered benzoates, phenolic antioxidants, phosphites and phosphonites and mixtures thereof, in an amount of from 0.001 to 1.5 % by weight of the weight of the polyolefin.

10. The method according to claim 9, wherein the further stabilizer is selected from
the group consisting of hindered benzoates (VI) of formula VI 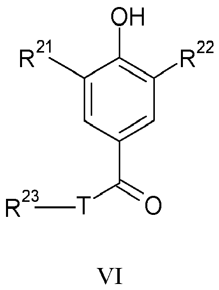 wherein
each of R²¹ and R²² is, independently, chosen from C₁₋₁₂ alkyl,
T represents O or NR²⁴, where R²⁴ is H or C₁₋₃₀ hydrocarbyl,
R²³ is H or C₁₋₃₀ hydrocarbyl.

11. The method according to claim 10, wherein the hindered benzoate (VI) is selected from 2,4-di-tert-butylphenyl 3,5-di-tert-butyl-4-hydroxybenzoate and hexadecyl-3,5-di-tert-butyl-4-hydroxybenzoate, as well as mixtures thereof.

12. A polyolefin film having a thickness of 1 to 350 micron comprising a stabilizer composition comprising
i) at least one o-hydroxyphenyl triazine ultraviolet light absorber (I) selected from 2-(2'-hydroxyphenyl)-1,3,5-triazine compounds according to Formula I: 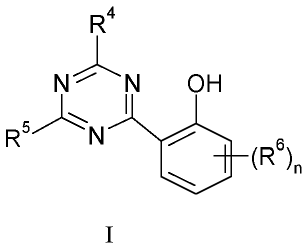 wherein:
each of R⁴ and R⁵ is, independently, chosen from C₆-₁₀ aryl; or C₆-₁₀ aryl substituted by one to three of : hydroxyl, halogen, C₁-₁₂ hydrocarbyl, C₁-₁₂ alkoxy, C₁-₁₂ alkoxyester, C₂-₁₂ alkanoyl, phenyl or by phenyl substituted by one to three of : hydroxyl, halogen, C₁-₁₂ hydrocarbyl, C₁-₁₂ alkoxy, C₁-₁₂ alkoxyester, and C₂-₁₂ alkanoyl, or by mixtures thereof; or mono- or di-C₁-₁₂ hydrocarbyl-substituted amino; or C₂-₁₂ alkanoyl ; or C₁-₁₂ alkyl; or C₁-₁₂ alkoxy;
n is from 0 to 4; and
R⁶ is a substituent that is the same or different, at from 0 to 4 positions of the 2-hydroxyphenyl portion of Formula I, and is independently chosen from hydroxyl, halogen, C₁-₁₂ hydrocarbyl, C₁-₁₂ alkoxy, C₁-₁₂ alkoxyester, C₂-₁₂ alkanoyl and phenyl; and
ii) at least one ultraviolet light stabilizer selected from tetramethyl-4-piperidinyl
compounds (II) according to Formula II 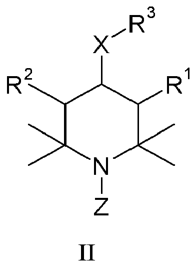 wherein:
X represents a bridging group selected from the group of -O-C(=O)-, -CR'₂-C(=O)-, -CR'₂-C(=O)-NR'-, -NR'-C(=O)- , -C(=O)-NR'-, -O-, -NR'- or -C(=O)- where each R', independently, represents H or C₁₋₂₀ hydrocarbyl,
Z represents H, -R, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl,
R³ is a C₆₋₃₀ hydrocarbyl, and
each of R¹ and R² is, independently, chosen from H and C₁-C₆ alkyl; and
iii) at least one light stabilizer (III) chosen from hindered amine light stabilizers (HALS) different from compound of formula II.

13. The film according to claim 12, wherein the 2-(2'-hydroxyphenyl)-1,3,5-triazine compound (I) is 4,6-bis-(2,4-dimethylphenyl)-2-(2-hydroxy-4-octyloxyphenyl)-s-triazine.

14. The film according to any of claims 12 to 13, wherein the tetramethyl-4-piperidinyl compounds (II) is selected from compounds of formula IIa 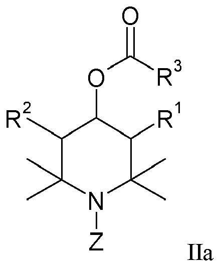 wherein
Z is H, a C₁₋₆ alkyl or -OR where R is a C₁₋₁₀ alkyl optionally substituted with hydroxyl, C₁₋₂₂ alkoxy or C₂₋₂₂ alkanoyl;
R³ is a C₆₋₃₀ alkyl or C₆₋₃₀ alkenyl; and
each of R¹ and R² is, independently, chosen from H and C₁-C₆ alkyl.

15. The film according to any of claims 12 to 14, wherein the tetramethyl-4-piperidinyl compound (II) is selected from those of formula II, IIa, IIb and/or IIc 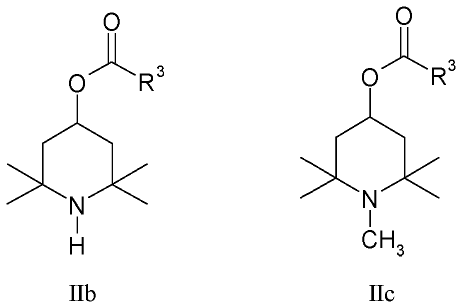 wherein R³ is a C₁₂₋₂₂ alkyl or C₁₂₋₂₂ alkenyl.

16. The film according to any of claims 12 to 15, wherein the tetramethyl-4-piperidinyl compound (II) is selected from 2,2,6,6-tetramethylpiperidin-4-yl-octadecanoate; 2,2,6,6- tetramethylpiperidin-4-yl-hexadecanoate; and mixtures thereof; 1,2,2,6,6-pentamethylpiperidin-4-yl-octadecanoate; 1,2,2,6,6- pentamethylpiperidin-4-yl-hexadecanoate; and mixtures thereof.

17. The film according to any of claims 12 to 16, wherein the hindered amine light stabilizer compound (III) is selected from those comprising at least one molecular fragment according to Formula IV 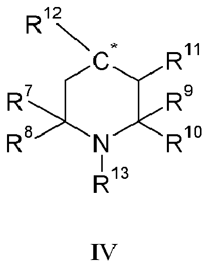 wherein
each of R⁷, R⁸, R9 and R¹⁰ is, independently, chosen from C₁-C₂₀ hydrocarbyl, with the proviso that R⁷ and R⁸ and/or R⁹ and R¹⁰ taken together with the carbon to which they are attached may form a C₅-₁₀ cycloalkyl;
R¹¹ is chosen from: H and C₁-C₈ hydrocarbyl;
R¹² is chosen from H and C₁-C₈ hydrocarbyl;
R¹³ represents H, -OH, -CH₂CN, C₁₋₂₀ hydrocarbyl, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl; and
the molecular fragment is bonded to the rest of the compound via the carbon atom marked * with the proviso that the molecular fragment can form a spiro structure with the rest of the compound so that R¹² does not exist;
and/or to Formula V 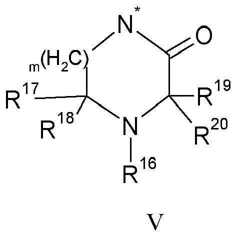 wherein
m is an integer from 1 to 2;
each of R¹⁷, R¹⁸, R¹⁹ and R²⁰ is, independently, chosen from C₁-C₂₀ hydrocarbyl, with the proviso that R¹⁷ and R¹⁸ and/or R¹⁹ and R²⁰ taken together with the carbon to which they are attached may form a C₅-₁₀ cycloalkyl;
R¹⁶ represents H, -OH, -CH₂CN, C₁₋₂₀ hydrocarbyl, -C(=O)-R or -OR where R is a C₁₋₂₀ hydrocarbyl, said hydrocarbyl being optionally substituted with one or more hydroxyl, C₁₋₃₀ alkoxy or C₂₋₃₀ alkanoyl; and
the molecular fragment is bonded to the rest of the compound via the nitrogen atom marked *.

18. The film according to claim 17, wherein the hindered amine light stabilizer (III) is1,6-hexanediamine, N,N'-bis(2,2,6,6-tetramethyl-4-piperidinyl)-, polymers with morpholine-2,4,6-trichloro-1,3,5-triazine reaction products, methylated or a mixture of 1,6-hexanediamine, N,N'-bis(2,2,6,6-tetramethyl-4-piperidinyl)-, polymers with 2,4-dichloro-6-(4-morpholinyl)-1,3,5-triazine and 1,6-hexanediamine, N,N'-bis(2,2,6,6-tetramethyl-4-piperidinyl)-, polymers with morpholine-2,4,6-trichloro-1,3,5-triazine reaction products, methylated.

19. The film according to any of claims 12 to 18, wherein the amount of ultraviolet light stabilizer (I) present in the polyolefin is from 0.01 to 0.6 % by weight, the amount of ultraviolet light stabilizer (II) present in the polyolefin is from 0.02 to 0.9 % by weight and the amount of light stabilizer (III) present in the polyolefin is from 0.05 to 2.0 % by weight.

20. The film according to any of claims 12 to 19, wherein the polyolefin film is made of polyethylene, polypropylene or ethylene based copolymers or mixtures thereof

21. The film according to any of claims 12 to 20, further comprising at least one further stabilizer selected from the group consisting of hindered benzoates, phenolic antioxidants, phosphites and phosphonites and mixtures thereof, in an amount of from 0.001 to 1.5 % by weight of the weight of the polyolefin.

22. The film according to claim 21, wherein the further stabilizer is selected from the
group consisting of hindered benzoates (VI) of formula VI 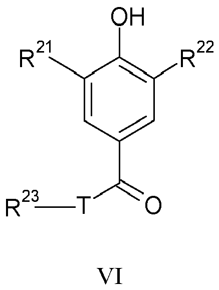 wherein
each of R²¹ and R²² is, independently, chosen from C₁₋₁₂ alkyl, T represents O or NR²⁴, where R²⁴ is H or C₁₋₃₀ hydrocarbyl,
R²³ is H or C₁₋₃₀ hydrocarbyl.

23. The film according to claim 22, wherein the hindered benzoate (VI) is selected from 2,4-di-tert-butylphenyl 3,5-di-tert-butyl-4-hydroxybenzoate and hexadecyl-3,5-di-tert-butyl-4-hydroxybenzoate, as well as mixtures thereof.
